# EUROPÄISCHE PATENTANMELDUNG

(11) **EP 1 696 541 A1**
(43) Veröffentlichungstag der Anmeldung: **30.08.2006**
(21) Anmeldenummer: 06003653.0
(22) Anmeldetag: 23.02.2006
(51) Int. Cl.: H02K 41/03

(54) **Nicht rotierender Linearaktuator**

(30) Priorität: 24.02.2005 DE 102005008812
(71) Anmelder: Ortlinghaus-Werke GmbH, 42929 Wermelskirchen (DE)
(72) Erfinder: Bierlich, Rainer, Dr.-Ing., 40699 Erkrath (DE)
(74) Vertreter: Füssel, Michael

(57) **Zusammenfassung**

Linearaktuator entsprechend dem Synchronmotorprinzip, bei welchem der bewegliche Teil konstruktiv nicht rotierend in ein vom Linearaktuator über dessen Axialbewegung zu betätigendes System eingebunden ist, wobei die Ringpermanentmagnete (5) radial magnetisiert sind.

## Beschreibung

Zur elektrischen Betätigung nicht rotierender Kolben kann ein Linearaktuator benutzt werden, der nicht zu rotieren braucht.

Durch Variation derartiger Linearaktuatoren im Hinblick auf die Betätigungskraft, den Betätigungsweg und die Versorgungsspannung ist der Einsatz in vielfältigen technischen Problemstellungen möglich.

Linearaktuatoren, bei denen der bewegliche Teil sich zur Betätigung des Kolbens nicht drehen zu lassen braucht, werden z.B. benötigt zur Betätigung von rotierenden Kolben, wenn zwischen dem rotierenden Kolben und dem Linearaktuator ein axial wirkendes Wälzkörperlager vorgesehen ist.

Auf diese Weise wird die Drehbewegung des rotierenden Kolbens von der nicht mitdrehenden Schubstange oder ähnliches des Linearaktuators gekoppelt.

Ist allerdings eine hohe Betätigungskraft gefordert, werden Linearaktuatoren verwendet, bei denen der Aufbau vollständig rotationssymmetrisch ist.

Diese Motoren sind nach einem synchronähnlichen Prinzip realisiert. Der bewegliche Teil ist eisenlos und besteht aus Ringpermanentmagneten, die axial magnetisiert sind. Der feststehende Teil ist aus einer Solenoidwicklung aufgebaut, die zwei- oder dreiphasig ausgeführt ist. Die vergleichsweise einfache Konstruktion ähnelt der eines Elektromagneten.

Die eisenlose Ausführung und die Art der Konstruktion bedingt längere Wege des magnetischen Flusses durch Luft oder die Magneten selber, so daß der Wirkungsgrad des Motors sinkt. Die Befestigung der Magneten und die Führung des beweglichen Teils muß aus nicht magnetischem Material gefertigt werden, was die Konstruktion verteuert. Die Solenoidwicklung muß ebenfalls durch ein nichtmagnetisches Material befestigt werden, dies erhöht den Luftspalt des Motors und führt ebenfalls zu Wirkungsgradverlusten, was zu einem ungünstigen Verhältnis von elektrischer Leistung zu bereitgestellter Betätigungskraft bzw. Betätigungsdynamik führt. Durch die Ausführung dieser Linearaktuatoren ähnlich eines Elektromagneten und den dadurch bedingten hohen Kraftschwankungen abhängig von der jeweiligen Relativposition zwischen Läufer und Stator, die ähnlich den Rastmomenten eines drehenden Motors anzusehen sind, ist eine exakte Wegregelung oder Positionierung nur in Verbindung mit sehr genauen und dadurch sehr teuren Wegsensoren möglich. Außerdem ist ein modularer Aufbau einer solchen Konstruktion bezüglich der Betätigungskraft oder der Versorgungsspannung nicht denkbar, da sich bedingt durch die Magnet- und Wicklungsabmessungen alle weiteren Konstruktionsmerkmale ergeben.

Insgesamt ist dies eine einfache aber relativ teure Konstruktion mit erheblicher Verminderung des möglichen Wirkungsgrades und weit eingeschränkter Möglichkeit zum modularen Aufbau.

Aufgabe der Erfindung ist daher die Konstruktion eines linear zu betätigenden nicht rotierenden Aktuators, der die oben genannten Nachteile zuverlässig vermeidet.

Dabei soll über einen hohen Wirkungsgrad des nicht rotierenden Aktuators die zur Verfügung zu stellende Umrichterleistung in bezug auf Betätigungskraft, Haltekraft und Dynamik möglichst optimal umgesetzt werden, so daß sich insgesamt eine kostengünstige Konstruktion ergibt, aus der sich ein modulares Baukastensystem entwickeln läßt.

Dies Aufgabe wird gelöst durch die Merkmale des Hauptanspruchs.

Wesentlich ist, daß der bewegliche Teil aus Ringpermanentmagneten besteht, die, obwohl sie im Betrieb nicht rotieren sollen, radial magnetisiert sind.

Vorteilhafterweise handelt es sich um eine Konstruktion auf dem Prinzip des Linearmotors nach dem Synchronprinzip, bei dessen Permanentmagneten senkrecht zur Bewegungsrichtung zumindest überwiegend eine Rotationssymmetrie des Magnetisierungszustandes hergestellt wird.

Vorteilhafterweise wird hierzu ein magnetischer Träger in Form eines Rohres verwendet, welches die Magnete mechanisch trägt und den magnetischen Fluß führen kann.

Der Stator des Linearaktuators besteht aus einzelnen konzentrierten Wicklungen, die gleichmäßig verteilt und radial angeordnet werden. Diese Wicklungen werden ebenfalls von einem magnetischen Träger in Form eines Rohres mechanisch gehalten, welches ebenfalls den magnetischen Fluß führt und als Gehäuse genutzt werden kann.

Die magnetischen Kerne der Wicklungen jeder einzelnen Phase können durch einen magnetischen Ring miteinander verbunden werden, der für eine optimierte Führung des magnetischen Flusses sorgt.

Die Anzahl der unterschiedlichen Phasen des elektrischen Systems führt zur Anordnung der einzelnen Wicklungen in axial hintereinander angeordneten Radialebenen.

Das so entstandene Aktuatorgrundsegment, bestehend aus den Ringen mit den konzentrierten Wicklungen und dem zugehörigen beweglichen Teil, kann sowohl im beweglichen als auch im statischen Teil des Linearaktuators axial hintereinander angeordnet werden, um so den Betätigungsweg und/oder die Betätigungskraft zu variieren. Verschiedene Verschaltungen der einzelnen konzentrierten Wicklungen erlauben den Betrieb mit unterschiedlichen Betriebsspannungen.

Dabei ist der bewegliche Teil, der aus radial magnetisierten Ringmagneten und einem magnetischen Trägerrohr besteht, einfach herzustellen und damit kostengünstig.

Bedingt durch die Konstruktion ist es möglich, unterschiedlich hohe bzw. lange Magnetringe mit Abstandshaltern einzusetzen, wodurch sich sehr einfach eine Modularität bezüglich der Betätigungskraft bei grundsätzlich gleichbleibender Konstruktion ergibt. Die einzelnen Wicklungen jeder Phase des statischen Teils können unterschiedlich verschaltet werden, so daß sich ohne Leistungsverringerung verschiedene Versorgungsspannungen realisieren lassen. Zur Führung des magnetischen Flusses werden Symmetrierungsringe, die eine optimale Kopplung von beweglichem und statischem Teil gewährleisten. Die sich so ergebenden kurzen Wege des magnetischen Flusses in Luft und in den Magneten führen zu einem besonders hohen Wirkungsgrad.

Ein Grundsegment des Aktuators besteht bei einem z.B. dreiphasigen elektrischen System aus drei Ringen mit den konzentrierten Wicklungen und den zugehörigen Permanentmagneten. Diese Segmente können auch beliebig axial hintereinander angeordnet werden, so daß sich eine Modularität bezüglich des Betätigungsweges und/oder der Betätigungskraft ergibt.

Dieser Aufbau ist ideal geeignet, um ein Baukastensystem zu realisieren, da die teureren Bauteile, wie z.B. Magnetringe und Spulen, in allen Ausführungen gleich verwendet werden können und sich auf diese Weise bei Linearaktuatoren mit hohen Betätigungskräften trotzdem hohe Einsparpotenziale ergeben.

Nur die kostengünstigeren Bauteile, wie z.B. die Trägerrohre, sind ausführungsspezifisch.

Im folgenden wird die Erfindung anhand eines Ausführungsbeispiels näher erläutert:

Es zeigen:
- Fig.1 einen: Axialschnitt durch ein dreiphasiges Segment des Aktuators; und
- Fig.2 einen: Radialschnitt durch ein Ausführungsbeispiel gem. Fig. 1.

Sofern im folgenden nichts anderes gesagt ist, gilt die folgende Beschreibung stets für alle Figuren.

Die Figuren zeigen einen Linearaktuator nach der vorliegenden Erfindung.

Die gestrichelte Linie 7 soll diejenige Achse sein, um welche der Linearaktuator rotationssymmetrisch ist.

Ein derartiger Linearaktuator besteht aus drei konzentrierten Wicklungen 2, die durch Wickelkörper aus Kunststoff 4 gehalten werden. Das magnetische Material des statischen Teils 1 führt den magnetischen Fluß und symmetriert diesen durch die magnetischen Ringe 3 gegenüber den Magneten.

Im beweglichen Teil sind vier Permanentmagnete 5 angeordnet, die auf dem magnetischen Rohr 5, welches das innere Trägerrohr darstellt, befestigt werden.

Abstand, Anzahl und Stärke der Magentisierung können auf einfache Weise durch unterschiedliche Anordnung von dünnen Magnetringen und Ringen aus nicht magnetischem Material variiert werden.

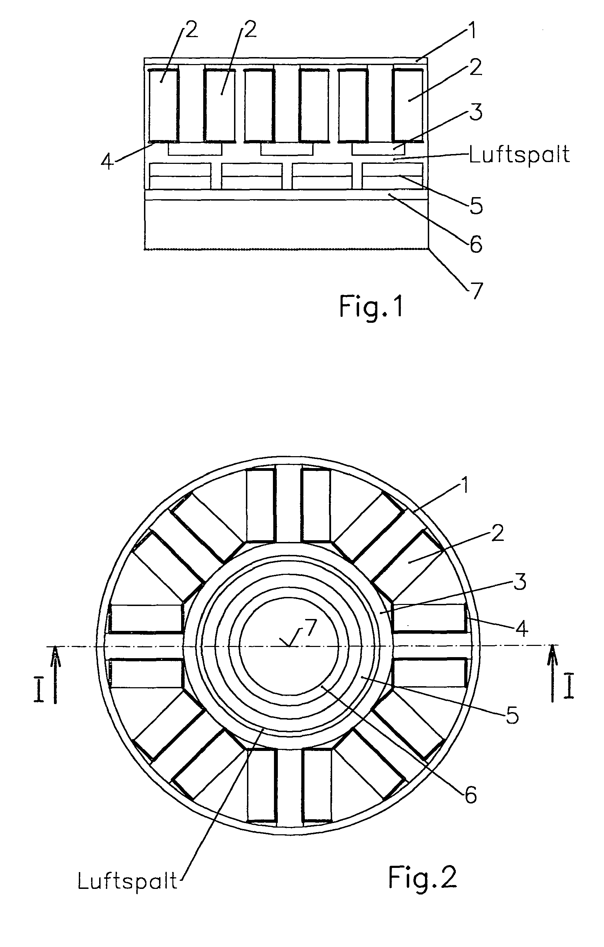

Abbildung 2 ist ein Radialschnitt durch den Aktuator, der genau in einer Wicklungsebene liegt. Der äußere Ring 1 ist als durchgängiges Rohr ausgeführt und bildet das Gehäuse des Aktuators. Es sind acht Wicklungen 2 gezeigt, die regelmäßig verteilt in dieser Ebene angeordnet sind. Durch unterschiedliche Verschaltung lassen sich vier verschiedene Betriebsspannungen realisieren. Die inneren Ringe 3 haben eine ähnliche Funktion wie Polschuhe. Sie sorgen dafür, daß der magnetische Fluß möglichst homogen und radial die Magnete 5 durchdringt. Bei den Magneten 5 handelt es sich um Ringmagnete.

Zwischen dem Außenumfang des Ringmagnets 5 und dem Innenumfang des inneren Ringes 3 befindet sich ein nicht näher bezeichneter Luftspalt, der sehr geringe Spaltabmessungen haben kann.

Durch die gezeigte Konstruktion ist es zusätzlich möglich, die Polzahlen von statischem und beweglichem Teil unterschiedlich auszuführen. In diesem Fall besteht ein Segment, entsprechend der Phasenzahl, aus drei Spulenringen. Dem gegenüber stehen vier Permanentmagnete, was zu einer erheblichen Vergleichmäßigung der Kraft, bezogen auf die Axialposition des beweglichen Teils führt.

Deshalb ist eine sensorlose Regelung der Axialposition des Aktuators abhängig von der geforderten Genauigkeit möglich.

Insgesamt bietet diese Konstruktion alle geforderten Eigenschaften bezüglich der Modularität von Betätigungsweg, Betätigungskraft und Versorgungsspannung und ist, bedingt durch den hohen Wirkungsgrad und die effektive Materialausnutzung kostengünstig herzustellen.

Sie bietet zusätzlich den Vorteil einer sensorlosen Regelung der Axialposition.

Alle Eigenschaften zusammen ermöglichen ein optimiertes Baukastensystem für die Betätigung von nicht rotierenden Kolben oder von rotierenden Kolben, so lange die Rotationsbewegung des Kolbens von dem nicht rotierenden Teil des Linearaktuators über ein Axiallager entkoppelt ist.

### Bezugszeichenliste

- 1: statischer Teil
- 2: Wicklung
- 3: Ring
- 4: Wickelkörper aus Kunststoff
- 5: Ringpermanentmagnet
- 6: magnetisches Rohr
- 7: Rotationssymmetrieachse

## Patentansprüche

1. Linearaktuator entsprechend dem Synchronmotorprinzip, bei welchem der bewegliche Teil konstruktiv nicht rotierend in ein vom Linearaktuator über dessen Axialbewegung zu betätigendes System eingebunden ist, wobei die Ringpermanentmagnete (5) radial magnetisiert sind.

2. Linearaktuator nach Anspruch 1, **dadurch gekennzeichnet, daß** die Statorwicklungen (2) der einzelnen Phasen aus einzelnen konzentrierten Wicklungen bestehen.

3. Linearaktuator nach Anspruch 1 oder 2, **dadurch gekennzeichnet, daß** für jede Phase Ringe (3) aus magnetischem Material zur Homogenisierung des magnetischen Flusses im Luftspalt eingesetzt werden.

4. Linearaktuator nach einem der Ansprüche 1 bis 3, **dadurch gekennzeichnet, daß** der axialbewegliche Teil des Linearaktuators über ein Axiallager mit einem während des Betriebs rotierenden technischen Kraftnehmer verbunden ist, wobei die Drehbewegung des Kraftnehmers von dem nicht mitdrehenden Läufer des Linearaktuators über ein Axiallager entkoppelt ist.
